# EUROPEAN PATENT APPLICATION

(11) **EP 3 477 122 A1**
(43) Date of publication of application: **01.05.2019**
(21) Application number: 17425110.8
(22) Date of filing: 30.10.2017
(51) Int. Cl.: F15B 13/042

(54) **VALVE SYSTEM**

(71) Applicant: Dana Brevini S.p.A., 42124 Reggio Emilia (IT)
(72) Inventor: Fasano, Stefano, 42124 Reggio Emilia (IT); Melloni, Paolo, 42124 Reggio Emilia (IT); Bartoli, Maurizio, 42123 Reggio Emilia (IT)
(74) Representative: Modiano, Micaela Nadia

(57) **Abstract**

A valve system controls the flow of pressurised fluid and enables recovery of the pressurised fluid. The valve system comprises a first main line for receiving pressurised fluid from a fluid displacement unit and a second main line for sending pressurised fluid to a work unit. A valve means is positioned between the first main line and the second main line and fluidly connects and disconnects the first main line and the second main line in a first configuration and a second configuration. A branch line connects the first main line to the valve means to permit flow of pressurised fluid from the branch line for moving from the first configuration to the second configuration.

## Description

### Technical Field

This disclosure relates to the field of hydraulic valves, in particular to the field of pressure reducing valves and more particularly to the field of pilot operated pressure reducing valves.

### Background

Pressure reducing valves are generally used to limit pressure in a hydraulic system. The pressure value may be reduced so as to be lower than the required pressure value. Pressure reducing valves are generally used to provide a stable pressure to a part of a hydraulic circuit that requires a lower pressure. A lower pressure may be required in the event an actuator is not designed to take a full system pressure or the pressure load being supplied exceeds the maximum pressure load of the actuator. Pressure reducing valves may be provided as pilot operated valves. Pilot operated valves may require a lower pressure to that of the main stage for actuation.

EP3102450 describes the use of pressure reducing valves in hydraulic hybrid systems for a vehicle. The hydraulic hybrid system has a high pressure hydraulic accumulator and a low pressure hydraulic accumulator in fluid communication with a hydraulic circuit. The high pressure hydraulic accumulator in selectively fluidly connected to a first and a second main fluid line of the hydraulic circuit through first and second shut-off valves. The low pressure accumulator is be selectively fluidly connected to the first main fluid line through a third shut-off valve and is selectively fluidly connected to the second main fluid line through a fourth shut-off valve. The selection of a vehicle mode is made through the disconnection and connection of the accumulators to the hydraulic circuit.

The present disclosure is directed, at least in part, to improving or overcoming one or more aspects of the prior art system.

### Brief Summary of the Invention

The present disclosure describes a valve system comprising a first main line for receiving pressurised fluid from a fluid displacement unit; a second main line for sending pressurised fluid to a work unit; valve means positioned between the first main line and the second main line, the valve means being moved between a first and a second configuration wherein the valve means fluidly connects the first main line to the second main line in the first configuration and fluidly disconnects the first main line from the second main line in the second configuration; and a branch line connecting the first main line to the valve means wherein the valve means is actuatable to permit flow of pressurised fluid from the branch line for moving from the first configuration to the second configuration.

### Brief Description of the Drawings

The foregoing and other features and advantages of the present disclosure will be more fully understood from the following description of various embodiments, when read together with the accompanying drawings, in which:
Fig. 1 is a schematic drawing of a valve system according to the present disclosure;
Fig. 2 is a schematic drawing of the valve system of Fig. 1 in a first operating mode;
Fig. 3 is a schematic drawing of the valve system of Fig. 1 in a second operating mode;

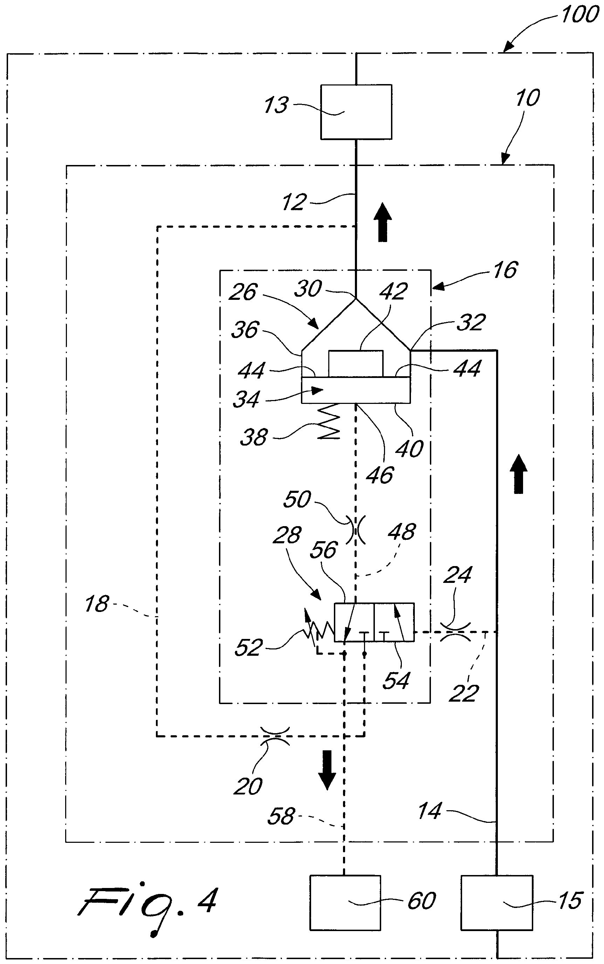

Fig. 4 is a schematic drawing of the valve system of Fig. 1 in a third operating mode; and

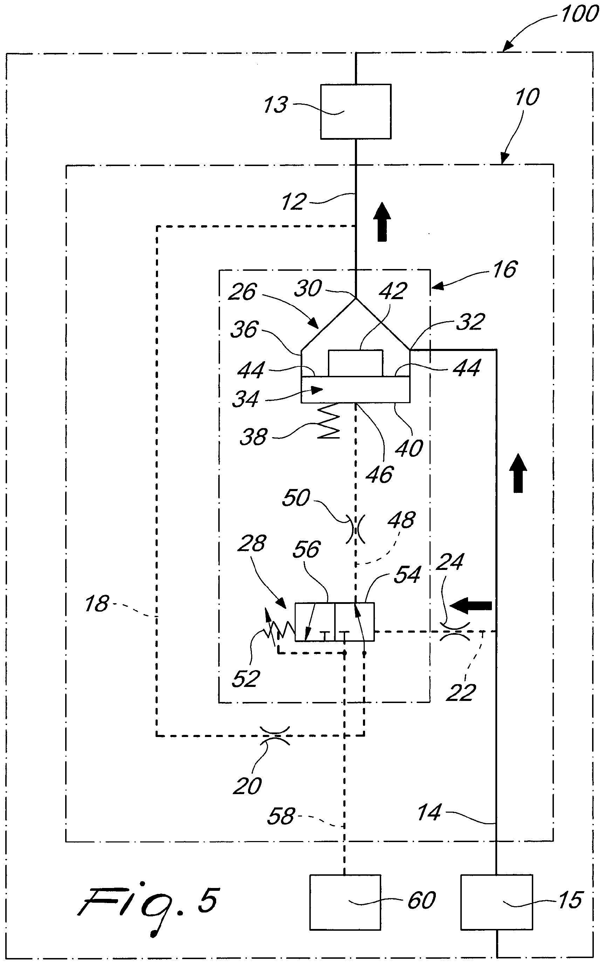

Fig. 5 is a schematic drawing of the valve system of Fig. 1 in a fourth operating mode.

### Detailed Description

This disclosure generally relates to a valve system that controls the flow of pressurised fluid and enables recovery of the pressurised fluid.

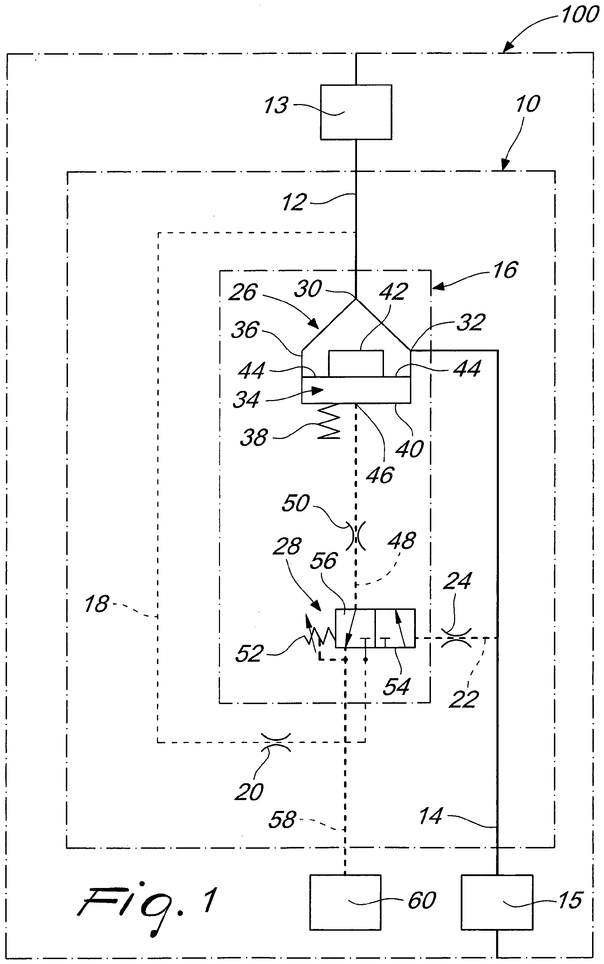

Fig. 1 illustrates the valve system **10.** The valve system **10** comprises a first main line 12. The first main line **12** is configured for receiving pressurised fluid from a fluid displacement unit **13.** In an embodiment, the fluid displacement unit **13** may be a hydraulic accumulator. The valve system **10** may be connected to the fluid displacement unit **13** through an external fluid line or a hydraulic accumulator circuit.

The valve system **10** comprises a second main line **14.** The second main line **14** is configured for sending pressurised fluid to a work unit **15.** In an embodiment, the work unit **15** may be an actuator that is operated hydraulically. The valve system **10** may be connected to the work unit **15** through an external fluid line or a hydraulic work circuit.

The valve system **10** comprises a valve means **16.** The valve means **16** is configured to regulate the distribution of fluid in the valve system **10.** Valve means **16** is configured to regulate the flow of pressurised fluid into and out of the valve system **10** through the first main line **12.** Valve means **16** is configured to regulate the flow of pressurised fluid to and from the fluid displacement unit **13** through the first main line **12.** Valve means **16** is configured to regulate the flow of pressurised fluid into and out of the valve system **10** through the second main line **14.** Valve means **16** is configured to regulate the flow of pressurised fluid to and from the work unit **15** through the second main line **14.**

The valve means **16** is positioned between the first main line **12** and the second main line **14.** Valve means **16** is interposed between the first main line **12** and the second main line **14.** Valve means **16** is configured to fluidly connect the first main line **12** to the second main line **14.** Valve means **16** is configured to fluidly disconnect the first main line **12** from the second main line **14.** Valve means **16** is configured to enable passage of fluid between the first main line **12** and the second main line **14.** Valve means **16** is configured to regulate the flow of fluid between the first main line **12** and the second main line **14.**

The valve means **16** is configured to move between a first configuration and a second configuration. Valve means **16** is configured to move as a result of fluid pressure differences in the first main line **12** and the second main line **14.** Valve means **16** is configured to permit flow of pressurised fluid from the first main line **12** to the second main line **14** in the first configuration. Valve means **16** is configured to block the flow for pressurised fluid from the first main line **12** to the second main line **14** in the second configuration. In an embodiment, valve means **16** is configured to be normally in the second configuration.

In an embodiment, valve means **16** is configured to permit flow for pressurised fluid from the second main line **14** to the first main line **12** in the first configuration. Valve means **16** is configured such that the change in the flow direction of fluid is dependent on the fluid pressure differential between the first main line **12** and the second main line **14.**

The valve system **10** comprises a branch line **18** connecting the first main line **12** to the valve means **16.** In an embodiment, branch line **18** may have a smaller diameter relative to the first main line **12.** Branch line **18** may have a smaller diameter relative to the second main line **14.**

Branch line **18** is configured to enable flow of pressurised fluid from the first main line **12** to the valve means **16.** The valve means **16** is actuatable to permit flow of pressurised fluid from the branch line **18.** The passage of pressurised fluid from the first main line **12** to the valve means **16** through the branch line **18** is controlled by the valve means **16.** Valve means **16** is configured such that flow of pressurised fluid to the valve means **16** from the branch line **18** may effect a move from the first configuration to the second configuration. In an embodiment, flow of pressurised fluid to the valve means **16** to effect a move from the first configuration to the second configuration is dependent on the pressure differential between the first main line **12** and the second main line **14.**

The valve system **10** comprises a first flow control valve **20** positioned at the branch line **18.** The first flow control valve **20** may be positioned proximate to the valve means **16.** First control valve **20** serves to regulate the flow of pressurised fluid to the valve means **16.** First control valve **20** regulates the speed of the move from the first configuration to the second configuration of the valve means **16.**

Valve means **16** is configured to be actuated to permit flow of pressurised fluid from the branch line **18** to the valve means **16.** Actuation of the valve means **16** may enable valve means 16 to move from the first configuration to the second configuration. In an embodiment the valve means is hydraulically actutable. In an alternative embodiment the valve means is electrically actutable.

The valve system 10 may comprise a first valve component 26 and a second valve component 28. The first valve component 26 is fluidly connected to the second valve component 28. The first valve component 26 is configured to move between the first and second configuration. The first valve component 26 is configured to control the flow of pressurised fluid between the first main line **12** and second main line **14.** In an embodiment, first valve component **26** is configured to be normally in the second configuration.

The second valve component **28** is configured to be actuated by pressurised fluid in the second main line **14.** Second valve component **28** is configured to fluidly connect the branch line **18** to the valve means **16** when actuated. Second valve component **28** is configured to permit flow of pressurised fluid to from the branch line **18** to the valve means **16** when actuated.

The first valve component **26** is a logic valve. Logic valve **26** has a first port **30** and a second port **32.** The logic valve **26** is configured to be selectively switched to an open position in the first configuration and to a closed position in the second configuration. The logic valve **26** fluidly connects the first port **30** and the second port **32** in the first configuration. The logic valve **26** fluidly disconnects the first port **30** from the second port **32** in the second configuration. The first main line **12** is connected to the first port **30** of the logic valve **26.** The second main line **14** is connected to the second port **32** of the logic valve **26.**

The logic valve **26** further comprises a poppet **34** provided in a seat **36** and a closing spring **38.** The closing spring **38** serves to balance the mass of the poppet **34** in case the logic valve **26** is mounted in a position where gravitational force leads to the opening of the poppet **34.**

Poppet **34** comprises a pilot surface **40**. Poppet **34** is configured to be piloted by hydraulic pressure acting on the pilot surface **40**. Hydraulic pilot pressure acting on the pilot surface **40** moves the logic valve **26** from the first configuration to the second configuration. In the open position poppet **34** fluidly connects first port **30** and second port **32.** In the closed position poppet **34** fluidly disconnects first port **30** from second port **32.**

First flow control valve **20** serves to regulate the closing speed of poppet **34.** A greater amount of pressurised fluid will flow through the branch line **18** with a larger diameter of first flow control valve **20**. An increased flow of pressurised fluid results in the faster movement of the poppet 34 from the open position to the closed position. A smaller diameter of the first flow control valve **20** will result in a slower movement of the poppet **34** to the closed positioned. Speed regulation of the poppet **34** reduces the inertial forces that may cause vibration and oscillation.

Logic valve **26** has a pilot port **46.** Logic valve **26** is fluidly connected to the second valve component **28** through the pilot port **46.** Pressurised fluid entering through the pilot port **46** acts on the pilot surface **40**. Spring force of the closing spring **38** acts on the pilot surface **40**.

Poppet **34** further comprises a first surface **42** and a second surface **44.** Hydraulic pressure from fluid flowing through first port **30** and second port **32** may act on the first surface **42** and the second surface **44.** Hydraulic pressure on the first surface **42** and the second surface **44** may force the poppet **34** to be in the open position. Pilot surface **40** is equal to the sum of the first and second surfaces **42, 44.** Closing spring **38** ensures closure of the poppet **34** even when the sum of the forces caused by the hydraulic pressures acting on the first and second surfaces **42, 44** is equal to the force of the hydraulic pressure acting on the pilot surface **40**.

The second valve component **28** is a directional valve **28.** Directional valve **28** is fluidly connected to the logic valve **26** for controlling hydraulic pilot pressure to the logic valve **26.** Directional valve **28** controls the flow of pressurised fluid to the pilot port **46.** Directional valve **28** is configured to be actuatable. Directional valve **28** is configured to permit flow of pressurised fluid to the logic valve **26** when actuated. Directional valve **28** is configured to permit flow of pressurised fluid to the pilot port **46** when actuated.

The valve means **16** has a pilot line **48.** Directional valve **28** is fluidly connected to the logic valve **26** through the pilot line **48.** Pilot line **48** connects the directional valve **28** to the pilot port **46.** Pilot line **48** is configured to enable flow of pressurised fluid from the directional valve **28** to the logic valve **26.** The valve system **10** comprises a second flow control valve **50** positioned at the pilot line **48.**

Second flow control valve **50** serves to regulate the flow of pressurised fluid to the valve means **16.** Second flow control valve **50** regulates the speed of the move from the first configuration to the second configuration of the valve means **16.** Second flow control valve **50** regulates the flow of pressurised fluid to the valve means **16** in conjunction with the first control valve **20.**

Pilot line **48** is configured to enable flow of fluid from the logic valve **26** to the directional valve **28.** The directional valve **28** is configured to permit flow of fluid from the logic valve **26** to flow through the pilot line **48.**

Second flow control valve **50** serves to regulate the closing speed of poppet **34** of the logic valve **26.** A greater amount of pressurised fluid will flow through the pilot line **48** with a larger diameter of second flow control valve **50**. An increased flow of pressurised fluid results in the faster movement of the poppet **34** from the open position to the closed position. A smaller diameter of the second flow control valve **50** will result in a slower movement of the poppet **34** to the closed positioned.

The branch line **18** connects the first main line **12** to the directional valve **28.** The directional valve **28** selectively fluidly connects the branch line **18** to the pilot line **48.** The actuation force of the directional valve **28** is variable. The actuation force may be pre-set so as to be lower relative to the maximum pressure in the second main line **14.** The maximum pressure in second main line **14** is dependent on the work unit **15** and/ or the hydraulic circuit connecting the second main line **14** to the work unit **15.**

In an embodiment, the valve means **16** is hydraulically actuatable. The valve system **10** comprises an actuation line **22** connecting the second main line **14** to the valve means **16.** Actuation line **22** may enable flow of pressurised fluid from the second main line **14** to the valve means **16.** In an embodiment, actuation line **22** may have a smaller diameter relative to the first main line **12.** Actuation line **22** may have a smaller diameter relative to the second main line **14.** Actuation line **22** may have a diameter substantially equal to the branch line **18.**

The valve system **10** comprises a third flow control valve **24** positioned at the actuation line **22.** The third flow control valve **24** may be positioned proximate to the valve means **16.** Third flow control valve **24** serves to regulate the flow of pressurised fluid to the valve means **16.** Third flow control valve **24** regulates the speed of the actuation of the valve means **16.**

With the reference to the valve system **10** having a second valve component **28** configured as a directional valve **28,** the actuation line **22** connects the second main line **14** to the directional valve **28.** Actuation line **22** is configured to send pressurised fluid to actuate the directional valve **28.** Directional valve **28** is piloted by hydraulic pressure from the pressurised fluid in the actuation line **22.** When the pressure in the actuation line **22** reaches or exceeds a predetermined pressure the directional valve **28** is actuated. Actuation of the directional valve **28** connects the branch line **18** to the pilot line **48.**

Third flow control valve **24** serves to regulate the actuation of the directional valve **28.** A greater amount of pressurised fluid will flow through the actuation line **22** with a larger diameter of the third flow control valve **24.** An increased flow of pressurised fluid results in the faster actuation of the directional valve **28.** A smaller diameter of the third flow control valve **24** will result in a slower actuation of the directional valve **28.** Speed regulation of the directional valve **28** reduces the inertial forces that may cause vibration and oscillation.

In an alternate embodiment, the valve means **16** is electrically actuatable. The valve system **10** comprises a solenoid (not shown) for actuating the valve means **16.** The valve system **10** comprises a pressure sensor (not shown) provided on the second main line **14.** The pressure sensor is configured to monitor the pressure in the second main line **14.** The solenoid is electrically connected to the pressure sensor such that the solenoid is activated when the pressure in the second main line **14** reaches or exceeds a predetermined pressure.

With reference to the valve system **10** having a second valve component **28** configured as a directional valve **28,** the solenoid is configured for actuating the directional valve **28.** When the pressure in the second main line **14** reaches or exceeds a predetermined pressure the solenoid is configured to actuate the directional valve **28.** Actuation of the directional valve **28** connects the branch line **18** to the pilot line **48.**

In an embodiment, the directional valve **28** is a 3 way 2 position valve. The 3 way 2 position valve has a working spool position **54** and a normal spool position **56.** The 3 way 2 is hydraulically actuated from the normal spool position to the working spool position. The 3 way 2 position valve fluidly connects the branch line **18** to the pilot line **48** in the working spool position.

The hydraulic pressure for actuation of the 3 way 2 position valve is provided through the actuation line **22.** The 3 way 2 position valve has a return mechanism **52** for return from the working spool position **54** to the normal spool position **56.** The return mechanism **52** maintains the 3 way 2 position valve in the normal spool position **56.** In an embodiment, the return mechanism **52** is a mechanical return spring. The mechanical return spring has a variable return force. The actuation force of the return mechanism **52** is variable.

The valve system **10** further comprises a drain line **58.** Drain line **58** is connected to the directional valve **28.** The 3 way 2 position valve fluidly connects the drain line **58** to the pilot line **48** in the normal spool position **56.** The connection of the drain line **58** to the pilot line **48** enables pilot fluid in the logic valve **26** to be drained. Drain line **58** may have a branch leading to a cavity of the mechanical return spring.

The valve system **10** may be connected to a hydraulic circuit **100.** The hydraulic circuit **100** comprises the fluid displacement unit **13,** the work unit **15** and the valve system **10.** The first main line **12** is fluidly connected to the fluid displacement unit **13** and the second main line **14** is fluidly connected to the work unit 15. The hydraulic circuit **100** may further comprise a tank **60**. Drain line **58** may lead to the tank **60**. The valve system **10** is configured to operate in four modes.

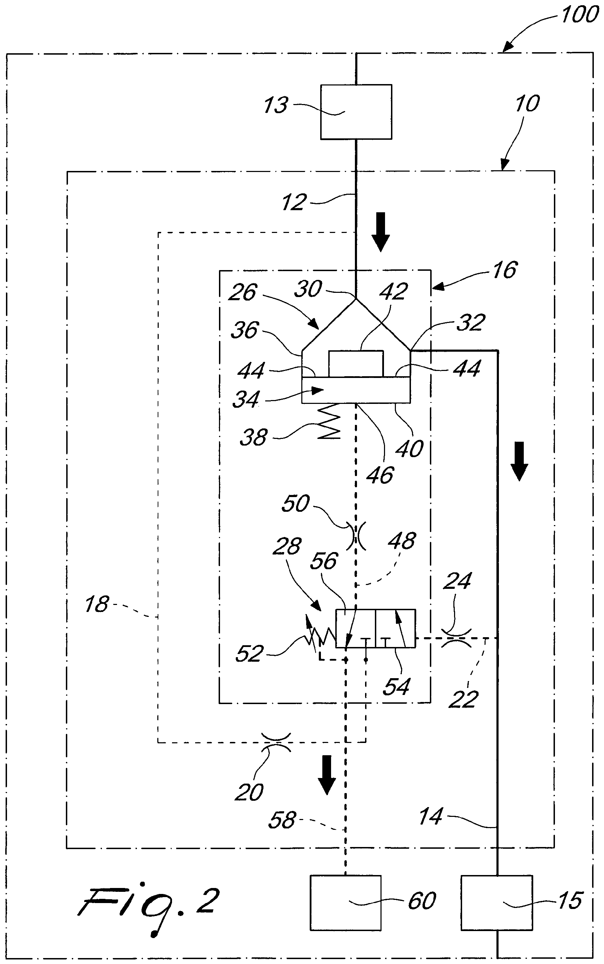

With reference to Fig. 2, in the first operating mode, the valve system **10** is configured to enable flow of pressurised fluid from the first main line **12** to the second main line **14.** The valve means **16** is moved from the second configuration to the first configuration. Valve means **16** fluidly connects first main line **12** to the second main line **14.**

In the hydraulic circuit **100** pressurised fluid flows from the fluid displacement unit **13** to the work unit **15.** The fluid pressure in the first main line **12** is greater relative to the fluid pressure in the second main line **14.** Fluid pressure in the second main line **14** is lower relative to the actuation force required to actuate the valve means **16.**

In the logic valve **26,** hydraulic pressure from pressurised fluid flowing through first port **30** acts on the first surface **42** and the second surface **44** to move the poppet **34** from the closed position to the open position. The force acting on the first surface **42** and the second surface **44** is greater than the spring force of the closing spring **38.**

Fluid pressure in the second main line **14** is lower relative to the actuation force required to actuate the directional valve **28.** The directional valve **28** is not actuated to enable flow of pressurised fluid from the branch line **18** to the logic valve **26.** The poppet **34** is in the open position.

The logic valve **26** fluidly connects the first port **30** to the second port **32.** The directional valve **28** as a 3 way 2 position valve is in the normal spool position **56** so as to connect the drain line **58** to the pilot line **48.** Pilot fluid from the logic valve **26** is drained through the drain line **58** to the tank **60**.

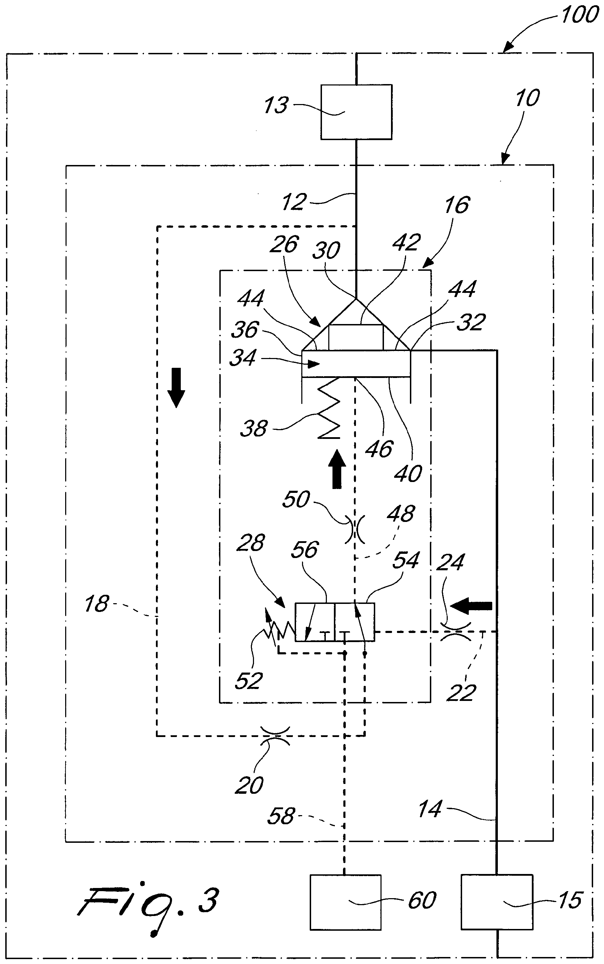

With reference to Fig. 3, in the second operating mode, the valve system **10** is configured to block flow of pressurised fluid from the first main line **12** to the second main line **14.** The valve means **16** is moved from the first configuration to the second configuration. Valve means **16** fluidly disconnects first main line **12** to the second main line **14.**

In the hydraulic circuit **100** pressurised fluid does not flow from the fluid displacement unit **13** to the work unit **15.** The fluid pressure in the first main line **12** is greater relative to the fluid pressure in the second main line **14.** Fluid pressure in the second main line **14** is greater relative to the actuation force required to actuate the valve means **16.**

Fluid pressure in the second main line **14** is greater relative to the actuation force required to actuate the directional valve **28.** The directional valve **28** is actuated to enable flow of pressurised fluid from the branch line **18** to the logic valve **26** through the pilot line **48.**

Flow of pressurised fluid to the logic valve **26** acts on the pilot surface **40**. The hydraulic pilot pressure of the pressurised fluid in the pilot line **48** and the spring force of the closing spring **38** pushes the poppet **34** to the closed position so as to fluidly disconnect the first port **30** to the second port **32.** The combined force of the hydraulic pilot pressure on the pilot surface **40** and the closing spring is greater than the force action on the first surface **42** and the second surface **44.** The directional valve **28** as a 3 way 2 position valve is actuated to the working spool position **54** so as to disconnect the drain line **58** from the pilot line **48.**

In the third and fourth operating modes of the valve system **10** pressurised fluid may be returned to the fluid displacement unit **13.** The fluid pressure in the first main line **12** is lower relative to the fluid pressure in the second main line **14.** Pressurised fluid flows from the second main line **14** to the first main line **12** through the valve means **16.** In the hydraulic circuit **100** pressurised fluid flows from the work unit **15** to fluid displacement unit **13.**

In the third operating mode, fluid pressure in the second main line **14** is lower relative to the actuation force required to actuate the valve means **16.** The fluid pressure in the second main line **14** is lower relative to the actuation force required to actuate the directional valve **28.** The directional valve **28** is not actuated to enable flow of pressurised fluid from the branch line **18** to the logic valve **26.** The poppet **34** is in the open position. The logic valve **26** fluidly connects the first port **30** to the second port **32.** The directional valve **28** as a 3 way 2 position valve is in the normal spool position **56** so as to connect the drain line **58** to the pilot line **48.** Pilot fluid from the logic valve **26** is drained through the drain line **58** to the tank **60**

In the fourth operating mode, fluid pressure in the second main line **14** is greater relative to the actuation force of the valve means **16.** The fluid pressure in the second main line **14** is greater relative to the actuation force required to actuate the directional valve **28.** The directional valve **28** is actuated to enable flow of pressurised fluid from the branch line **18** to the logic valve **26** through the pilot line **48.** Flow of pressurised fluid to the logic valve **26** acts on the pilot surface **40**. The directional valve **28** as a 3 way 2 position valve is actuated to the working spool position **54** so as to disconnect the drain line **58** from the pilot line **48.**

The hydraulic pilot pressure of the pressurised fluid does not push the poppet **34** to the closed position. Hydraulic pressure from pressurised fluid flowing through first port **30** and second port **32** acting on the first surface **42** and the second surface **44** is greater relative to the hydraulic pilot pressure acting on the pilot surface **40**. The poppet **34** remains in the open position. The logic valve **26** fluidly connects the first port **30** to the second port **32**

The skilled person would appreciate that foregoing embodiments may be modified or combined to obtain the **10** of the present disclosure.

### Industrial Applicability

This disclosure describes a valve system **10** for controlling the flow of pressurised fluid in a hydraulic circuit. In an embodiment, the valve system **10** may be formed as a hydraulic system that is integrated into the hydraulic circuit. In an alternative embodiment, the valve system **10** may be formed as a cartridge valve that can be integrated into the hydraulic circuit.

The valve system **10** may limit the maximum pressure in the fluid flowing from the first main line to the second main line thereby reducing the potential for a component malfunction or damage due to extreme pressures. The valve system **10** acts by blocking the flow of pressurised fluid from the first main line to the second main line when a pressure in the second main line exceeds a pre-determined pressure valve. Further, the valve system **10** enables the return of fluid to the fluid displacement unit **13.**

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A valve system (10) comprising:
a first main line (12) for receiving pressurised fluid from a fluid displacement unit;
a second main line (14) for sending pressurised fluid to a work unit;
valve means (16) positioned between the first main line (12) and the second main line (14), the valve means (16) being moved between a first and a second configuration wherein the valve means (16) fluidly connects the first main line (12) to the second main line (14) in the first configuration and fluidly disconnects the first main line (12) from the second main line in the second configuration (14); and
a branch line (18) connecting the first main line (12) to the valve means (16) wherein the valve means (16) is actuatable to permit flow of pressurised fluid from the branch line (18) for moving from the first configuration to the second configuration.

2. The valve system (10) of claim 1 wherein the valve means (16) comprises a first and a second valve component (26, 28) wherein the first valve component (26) is a logic valve (26) having a first port (30) and a second port (32) and wherein the logic valve (26) fluidly connects the first port (30) and the second port (32) in the first configuration.

3. The valve system (10) of claim 2 wherein the first main line (12) is connected to the first port (30) of the logic valve (26) and wherein the second main line (14) is connected to the second port (32) of the logic valve (26).

4. The valve system (10) of claims 2 or 3 wherein the second valve component (28) is a directional valve (28) fluidly connected to the logic valve (26) for controlling hydraulic pilot pressure to the logic valve (26).

5. The valve system (10) of claim 4 wherein the logic valve (26) has a pilot port (46) and wherein the valve means (16) comprises a pilot line (48) fluidly connecting the directional valve (28) to the pilot port (46).

6. The valve system (10) of claim 5 wherein the branch line (18) connects the first main line (12) to the directional valve (28) and wherein the directional valve (28) selectively fluidly connects the branch line (18) to the pilot line (48).

7. The valve system (10) of claims 4, 5 or 6 further comprising an actuation line (22) connecting the second main line (14) to the valve means (16) wherein the valve means (16) is configured to be actuated by flow of pressurised fluid through the actuation line (22).

8. The valve system (10) of claim 7 wherein the actuation line (22) connects the second main line (14) to the directional valve (28) for flow of pressurised fluid to actuate the directional valve (28).

9. The valve system (10) of claims 4, 5 or 6 further comprising a solenoid connected to a pressure sensor for sensing the pressure in the second main line (14) wherein the solenoid is configured to actuate the directional valve (28).

10. The valve system (10) any one of preceding claims 4 to 9 wherein the directional valve (28) is a 3 way 2 position valve wherein the 3 way 2 position valve fluidly connects the branch line (18) to the pilot line (48) in a working spool position (54).

11. The valve system (10) of any one of preceding claims 4 to 10 further comprising a drain line (58) connected to the directional valve (28) wherein the 3 way 2 position valve fluidly connects the drain line (58) to the pilot line (48) in a normal spool position (56).

12. A hydraulic circuit (100) comprising:
a fluid displacement unit (13);
a work unit (15);
a valve system (10) according to any one of preceding claims wherein the first main line (12) is fluidly connected to the fluid displacement unit (13) and the second main line (14) is fluidly connected to the work unit (15).

13. The hydraulic circuit (100) of claim 12 wherein the valve means (16) is moved to the first configuration when the fluid pressure in the first main line (12) is greater relative to the fluid pressure in the second main line (14) and the fluid pressure in the second main line (14) is lower relative to the actuation force of the valve means (16).

14. The hydraulic circuit (100) of claim 12 or 13 wherein the valve means (16) is moved to the second configuration when the fluid pressure in the first main line (12) is greater relative to the fluid pressure in the second main line (14) and the fluid pressure in the second main line (14) is greater relative to the actuation force of the valve means (16).

15. The hydraulic circuit (100) of claim 12 wherein the valve system (10) permits flow of fluid from the second main line (14) to the first main line (12) through the valve means (16) when the fluid pressure in the first main line (12) is lower relative to the fluid pressure in the second main line (14) and the fluid pressure in the second main line (14) is lower relative to the actuation force of the valve means (16).

16. The hydraulic circuit (100) of claim 12 wherein the valve system (10) permits flow of fluid from the second main line (14) to the first main line (12) through the valve means (16) when the fluid pressure in the first main line (12) is lower relative to the fluid pressure in the second main line (14) and the fluid pressure in the second main line (14) is greater relative to the actuation force of the valve means (16).
